# EUROPEAN PATENT APPLICATION

(11) **EP 3 656 209 A1**
(43) Date of publication of application: **27.05.2020**
(21) Application number: 19209956.2
(22) Date of filing: 19.11.2019
(51) Int. Cl.: A01G 24/15, A01G 31/02

(54) **A SYSTEM FOR HYDROPONIC PLANT GROWTH**

(30) Priority: 20.11.2018 IN 201841043733
(71) Applicant: Long Tunnel Farms, 600119 Uthandi, Ecr, Chennai (IN)
(72) Inventor: NARAYANASWAMY, Vishal, 600119 Uthandi, ECR, Chennai (IN)
(74) Representative: Caldon, Giuliano

(57) **Abstract**

A system (100) for hydroponic plant growth is disclosed. The system includes a semi-enclosed container (110), wherein the semi-enclosed container includes a floating sheet (120). The floating sheet includes a plurality of first openings, wherein the floating sheet is adapted to be placed on surface of nutrient solution (130). The semi-enclosed container also includes a plurality of containers (140). The plurality of containers includes a plurality of second openings. The plurality of containers is adapted to be received into the plurality of first openings of the floating sheet. The semi-enclosed container also includes a plurality of air stones (160), configured to be operatively coupled to an air pump. The plurality of air stones is configured to supply a pre-determined amount of air into the nutrient solution via the air pump (170).

## Description

### BACKGROUND

Embodiments of the present disclosure relate to plant growth systems, and more particularly to, a system for hydroponic plant growth.

Conventional methods of growing plants, including but not limited to, fruits and vegetables, consume plenty of water and require an ample amount of land. As most of the plants grown in and outside of the land, require soil to help grow the plants to their full term, wherein the soil needs to be of a good quality and the composition of the soil needs to meet the requirement of a particular plant. Maintaining the soil in which seeds/plants are planted and grown may be exhaustive and needs extreme care and attention, if not, the seeds/plants may wither. Other than soil, plenty of water is needed to support the growth of seeds/plants to their full term and sometimes, due to lack of water, many plants die.

As the plants growing in soil take longer time to yield result, people, especially farmers need to wait for longer time, even a year, to extract final products of the plants/crops to sells in a market and sometimes due to longer waiting period for the plants/crops to grow to their full term, farmers may face economic loss.

In the recent years, due to a huge number of people moving to cities, farming or growing plants in apartments or building complexes has become a difficulty for people who want to grow plants, especially fruits and vegetables grown by them. Due to limited space and regulated gardening in the aforementioned places, people lose out on gardening their plants in an efficient manner.

Therefore, there is a need for an improved system to overcome the aforementioned issues.

### BRIEF DESCRIPTION

In accordance with an embodiment of the present disclosure, a system for hydroponic plant growth is disclosed. The system includes a semi-enclosed container, wherein the semi-enclosed container includes a floating sheet. The floating sheet includes a plurality of first openings, wherein the floating sheet is adapted to be placed on surface of nutrient solution. The semi-enclosed container also includes a plurality of containers. The plurality of containers includes a plurality of second openings. The plurality of containers is adapted to be received into the plurality of first openings of the floating sheet. The semi-enclosed container also includes a plurality of air stones, configured to be operatively coupled to an air pump. The plurality of air stones is configured to supply a pre-determined amount of air into the nutrient solution via the air pump.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

### BRIEF DESCRIPTION OF THE DRAWINGS

The disclosure will be described and explained with additional specificity and detail with the accompanying figures in which:
FIG. 1 is a schematic representation of a system for hydroponic plant growth in accordance with an embodiment of the present disclosure; and
FIG. 2 is a flow chart representing the steps involved in a method for growing plants hydroponically of FIG. 1 in accordance with an embodiment of the present disclosure.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### DETAILED DESCRIPTION

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure.

The terms "comprises", "comprising", or any other variations thereof, are intended to cover a non-exclusive inclusion, such that a process or method that comprises a list of steps does not include only those steps but may include other steps not expressly listed or inherent to such a process or method. Similarly, one or more devices or sub-systems or elements or structures or components preceded by "comprises... a" does not, without more constraints, preclude the existence of other devices, sub-systems, elements, structures, components, additional devices, additional sub-systems, additional elements, additional structures or additional components. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

In the following specification and the claims, reference will be made to a number of terms, which shall be defined to have the following meanings. The singular forms "a", "an", and "the" include plural references unless the context clearly dictates otherwise.

Embodiments of the present disclosure relate to a system for hydroponic plant growth. The system includes a semi-enclosed container, wherein the semi-enclosed container includes a floating sheet. The floating sheet includes a plurality of first openings, wherein the floating sheet is adapted to be placed on surface of nutrient solution. The semi-enclosed container also includes a plurality of containers. The plurality of containers includes a plurality of second openings. The plurality of containers is adapted to be received into the plurality of first openings of the floating sheet. The semi-enclosed container also includes a plurality of air stones, configured to be operatively coupled to an air pump. The plurality of air stones is configured to supply a pre-determined amount of air into the nutrient solution via the air pump.

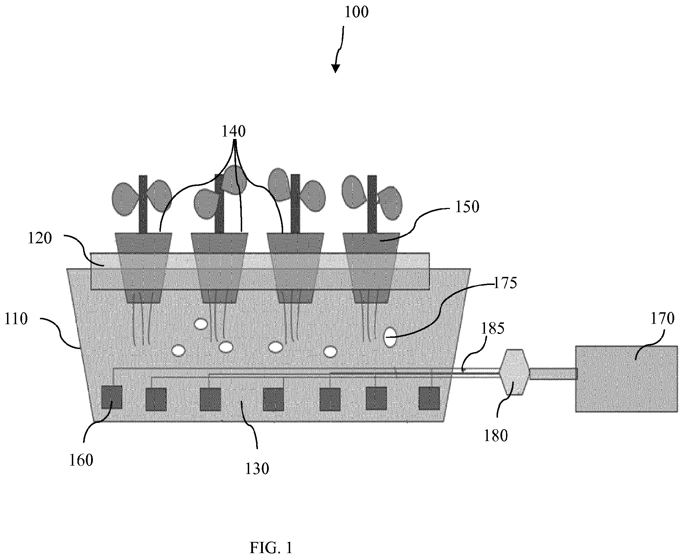

FIG. 1 is a schematic representation of a system 100 for hydroponic plant growth in accordance with an embodiment of the present disclosure. The system 100 includes a semi-enclosed container 110, wherein the semi-enclosed container 110 includes a floating sheet 120. In one embodiment, the semi-enclosed container 110 may include a rectangular shape, a circular shape and a square shape. In such embodiment, the semi-enclosed container 110 may be composed of cement or bricks. In some embodiment, the floating sheet 120 may include an expanded polyethene foam, a plastic or a metal floatation device.

The floating sheet 120 includes a plurality of first openings (not shown in FIG. 1), wherein the floating sheet 120 is adapted to be placed on surface of nutrient solution 130. In one embodiment, the plurality of first openings (not shown in FIG. 1) includes holes drilled into the floating sheet 120 to house a plurality of containers 140. In such embodiment, the plurality of containers 140 may include a netted pot and one or more recycled water bottles. The floating sheet 120 ensures that roots are submerged in the nutrient solution 130 while shoot is above the nutrient solution 130.

In some embodiment, the nutrient solution 130 may be contained in the semi-enclosed container 110. In such embodiment, the semi-enclosed container 110 may be secured with a first leak proof material. In some embodiment, the first leak proof material includes a sealant. In another embodiment, the semi-enclosed container 110 may be fabricated from a second leak proof material. In such embodiment, the second leak proof material may include a rubber, polyvinyl chloride (PVC), polyurethane (PU), silicone elastomer, fluoropolymers or wax.

The semi-enclosed container 110 also includes the plurality of containers 140. The plurality of containers 140 includes a plurality of second openings (not shown in FIG. 1). In one embodiment, the plurality of containers 140 may include a mixture 150 of at least one of light expanded clay aggregate LECA, cocopeat or a mixture of cocopeat and perlite. In such embodiment, the plurality of containers 140 may include 70 percent of the LECA at second end of the plurality of containers 140 and 30 percent of the cocopeat at the first end of the plurality of containers 140.

The plurality of containers 140 is adapted to be received into the plurality of first openings (not shown in FIG.1) of the floating sheet 120. In some embodiment, the plurality of second openings (not shown in FIG.1) may include one or more walls and a first end of each of the plurality of containers 140. Seed is planted directly into the plurality of containers 140 on the cocopeat. The plurality of containers 140 is watered by using a sprayer for the seed to germinate and the roots of the plants after germination touches the nutrient solution 130. The plurality of containers 140 which includes the plurality of second openings (not shown in FIG. 1) enable the roots to grow through the plurality of second openings. The plurality of containers 140 ensures that a direct contact between the roots and the nutrient solution 130 is maintained.

The semi-enclosed container 110 also includes a plurality of air stones 160, configured to be operatively coupled to an air pump 170. The plurality of air stones 160 is configured to supply a pre-determined amount of air to form air bubbles 175 into the nutrient solution 130 via the air pump 170. The air is spread evenly in the semi-enclosed container 110 by using a 6-way splitter 180 and diffused using the plurality of air stones 160. The air is supplied to the plurality of air stones 160 through a plurality of silicone tube 185. The plurality of air stones 160 ensures an amount of dissolved oxygen into the nutrient solution 130 increases for faster growth rate of plants.

In a specific embodiment, the system 100 further includes a temperature regulating unit configured to regulate temperature of the nutrient solution 130 based on weather and ambient temperature.

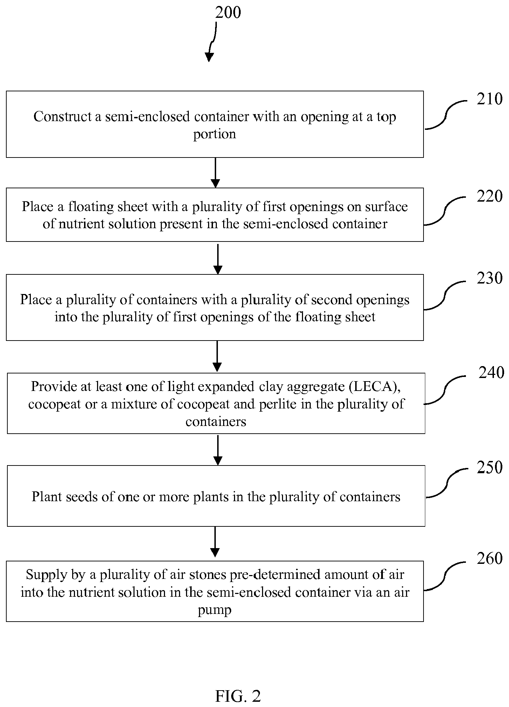

In one embodiment, a method 200 of growing plants hydroponically is disclosed as shown in FIG. 2. The method 200 includes constructing a semi-enclosed container with an opening at a top portion in step 210. The method 200 also includes placing a floating sheet with a plurality of first openings on surface of nutrient solution present in the semi-enclosed container in step 220. The method 200 also includes placing a plurality of containers with a plurality of second openings into the plurality of first openings of the floating sheet in step 230. The method 200 also includes providing at least one of light expanded clay aggregate (LECA), cocopeat or a mixture of cocopeat and perlite in the plurality of containers in step 240. The method 200 also includes planting seeds of one or more plants in the plurality of containers in step 250. The method 200 also includes supplying by a plurality of air stones, via an air pump pre-determined amount of air into the nutrient solution in the semi-enclosed container in step 260.

Various embodiments of the present disclosure enable farmers as well as people to grow one or more plants or crops hydroponically in a short span of time with higher yield and less economic loss due to bad weather conditions.

Moreover, the present disclosed system enables people residing in apartments or building complexes in cities to grow the plants of flowers, vegetables or fruits in a limited space and in the short span of time.

Furthermore, the present disclosed system doesn't require much care or attention for preparing or maintaining soil in which the plants or the crops are grown.

It will be understood by those skilled in the art that the foregoing general description and the following detailed description are exemplary and explanatory of the disclosure and are not intended to be restrictive thereof.

While specific language has been used to describe the disclosure, any limitations arising on account of the same are not intended. As would be apparent to a person skilled in the art, various working modifications may be made to the method in order to implement the inventive concept as taught herein.

The figures and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, the order of processes described herein may be changed and are not limited to the manner described herein. Moreover, the actions of any flow diagram need not be implemented in the order shown; nor do all of the acts need to be necessarily performed. Also, those acts that are not dependent on other acts may be performed in parallel with the other acts. The scope of embodiments is by no means limited by these specific examples.

## Claims

1. System (100) for hydroponic plant growth, comprising:
a semi-enclosed container (110) comprising:
a floating sheet (120), comprising a plurality of first openings, wherein the floating sheet (120) is adapted to be placed on surface of nutrient solution (130);
a plurality of containers (140), comprising a plurality of second openings, wherein the plurality of containers (140) is adapted to be received into the plurality of first openings of the floating sheet (120); and
a plurality of air stones (160), configured to be operatively coupled to an air pump (170), wherein the plurality of air stones (160) is configured to supply a pre-determined amount of air into the nutrient solution (130) via the air pump (170).

2. System (100) according to claim 1, wherein the semi-enclosed container (110) comprises of a rectangular shape, a circular shape and a square shape.

3. System (100) according to claim 1, wherein the nutrient solution (130) is comprised in the semi-enclosed container (110).

4. System (100) according to claim 1, wherein the semi-enclosed container (110) is secured with a first leak proof material.

5. System (100) according to claim 1, wherein the semi-enclosed container (110) is fabricated from a second leak proof material.

6. System (100) according to claim 1, wherein the floating sheet (120) comprises an expanded polyethene foam, plastic or a metal floatation device.

7. System (100) according to claim 1, wherein the plurality of containers (140) comprises a pot and one or more recycled water bottles.

8. System (100) according to claim 1, wherein the plurality of containers (140) comprises at least one of light expanded clay aggregate (LECA), cocopeat or a mixture of cocopeat and perlite.

9. System (100) according to claim 1, wherein the plurality of second openings is comprised on one or more walls and a first end of each of the plurality of containers (140).

10. System (100) according to claim 1, further may be comprising a temperature regulating unit configured to regulate temperature of the nutrient solution (130) based on weather and ambient temperature.
